# EUROPÄISCHE PATENTSCHRIFT

(11) **EP 1 021 669 B1**
(45) Veröffentlichungstag und Bekanntmachung des Hinweises auf die Patenterteilung: **23.04.2003**
(21) Anmeldenummer: 98954364.0
(22) Anmeldetag: 07.10.1998
(51) Int. Cl.: F16K 1/52

(54) **VENTILANORDNUNG**
VALVE ARRANGEMENT
CONFIGURATION DE SOUPAPE

(30) Priorität: 08.10.1997 DE 19744317
(43) Veröffentlichungstag der Anmeldung: 26.07.2000
(73) Patentinhaber: LUCAS INDUSTRIES PUBLIC LIMITED COMPANY, Solihull B90 4LA (GB)
(72) Erfinder: GEGALSKI, Helmut, D-56218 Mülheim-Kärlich (DE); WALD, Thomas, D-56288 Holnich (DE)
(74) Vertreter: Schmidt, Steffen J., Dipl.-Ing.
(86) Internationale Anmeldenummer: EP9806366
(87) Internationale Veröffentlichungsnummer: WO99018375

(56) Entgegenhaltungen:
- DE-A- 2 831 733
- US-A- 5 141 027

## Beschreibung

Die Erfindung betrifft eine Ventilanordnung gemäß den im Oberbegriff von Anspruch 1 definierten Merkmalen, wie sie beispielsweise aus der DE-A-28 31 733 bekannt ist.

Eine weitere Ventilanordnung ist unter anderem als sogenanntes "Normal-Closed"-Ventil bekannt. Wie diese Bezeichnung schon besagt, ist im unbetätigten Zustand, also der Grund- bzw. Normalstellung, die Strömungsverbindung zwischen den Fluidanschlüssen gesperrt, wogegen im betätigten Zustand die Strömungsverbindung zwischen den Fluidanschlüssen hergestellt ist. Damit im unbetätigten Zustand die Strömungsverbindung zwischen den Fluidanschlüssen gesperrt ist, ist ein Ventilglied unter Einwirkung einer Federanordnung vorgespannt, so dass dieses an einem Dichtsitz abdichtend zur Anlage kommt. Um im betätigten Zustand nun die Strömungsverbindung zwischen den Fluidanschlüssen herzustellen, ist es erforderlich, dass die Betätigungseinrichtung eine Kraft aufbringt, die zumindest die Vorspannkraft der Federanordnung zu überwinden vermag, so dass das Ventilglied von dem Dichtsitz abgehoben wird.

Allerdings ist es in den meisten Anwendungsfällen nicht ausreichend, wenn die Betätigungseinrichtung eine Kraft aufbringt, die nur minimal grösser als die Vorspannkraft der Federanordnung ist, da im Betrieb an den Fluidanschlüssen der Ventilanordnung unterschiedliche Fluiddrücke auftreten, wodurch auf das Ventilglied zusätzlich eine Druckdifferenzkraft wirkt, die je nach Wirkrichtung der von der Betätigungseinrichtung aufgebrachten Kraft entgegengerichtet ist. Demnach ist die Betätigungseinrichtung so auszulegen, dass die Betätigungskraft grösser ist als die Summe aus der Vorspannkraft der Federanordnung und der maximal zu erwartenden Druckdifferenzkraft, um eine sichere Funktion der Ventilanordnung zu gewährleisten. Der grosse Nachteil dabei ist, dass die Betätigungseinrichtung quasi überdimensioniert wird, insbesondere dann, wenn wie bei den überwiegenden Verwendungen im betätigten Zustand der Ventilanordnung ein grosser Strömungsquerschnitt gefordert ist, um eine Drosselwirkung der Ventilanordnung zu unterbinden. Ein grosser Strömungsquerschnitt bedeutet aber zusätzlich eine sehr grosse Druckdifferenzkraft, derzufolge eine hohe Betätigungskraft aufzubringen ist. Dadurch entstehen hohe Kosten und ein hoher Aufwand bei Auslegung der Ventilanordnung. Auch benötigt die Ventilanordnung dadurch einen relativ grossen Einbauraum.

Von daher hat es sich die Erfindung zur Aufgabe gemacht, eine Ventilanordnung unter Vermeidung der vorgenannten Nachteile zu entwickeln, die sich besonders einbauraumsparend gestalten lässt.

Zur Lösung der Aufgabe ist eine eingangs genannte Ventilanordnung gemäß den im kennzeichnenden Teil von Anspruch 1 definierten Merkmalen weiterentwickelt.

Der entscheidende Vorteil der erfindungsgemässen Ventilanordnung ist nun, das bevor die primäre Strömungsverbindung hergestellt wird, zunächst eine sekundäre Strömungsverbindung hergestellt wird. Aufgrund der sekundären Strömungsverbindung wird in dem Fall, dass unterschiedliche Fluiddrücke an den Fluidanschlüssen auf das Ventilglied zusätzlich eine Differenzdruckkraft ausüben, zunächst ein Druckausgleichsvorgang zwischen den Fluidanschlüssen ausgelöst, wodurch die Druckdifferenzkraft eliminiert wird, so dass die Druckdifferenzkraft beim Herstellen der primären Strömungsverbindung nicht mehr wirksam ist und sich nicht mehr nachteilig auswirken kann. Es ist also nur eine verhältnismässig geringe Betätigungskraft erforderlich, wodurch sich die Betätigungseinrichtung kostengünstig, mit einem geringen Aufwand sowie wenig Einbauraum benötigend ausführen lässt. Dadurch kann der durch die primäre Strömungsverbindung hauptsächlich bestimmte Strömungsquerschnitt verhältnismässig grosszügig dimensioniert werden, um eine unerwünschte Drosselwirkung im Durchströmverhalten der Ventilanordnung auszuschliessen. Da die sekundäre Strömungsverbindung im Vergleich zu der primären Strömungsverbindung nur einen geringen Strömungsquerschnitt aufweist, ist die beim Herstellen der zweiten Strömungsverbindung zu überwindende Druckdifferenzkraft vernachlässigbar gering.

Vorzugsweise können die Betätigungseinrichtung und/oder die weitere Betätigungseinrichtung elektromagnetisch und/oder hydraulisch gesteuert werden. So kann in besonderer Weise die Betätigungseinrichtung, die das Ventilglied zur Herstellung der primären Strömungsverbindung betätigt, elektromagnetisch und die weitere Betätigungseinrichtung, die das weitere Ventilglied zur Herstellung der sekundären Strömungsverbindung betätigt, hydräulisch gesteuert werden. Dabei kann die weitere hydraulisch betätigte Betätigungseinrichtung über die zwischen den Fluidanschlüssen bestehende Druckdifferenz gesteuert werden, um die sekundäre Strömungsverbindung zwecks Auslösung des Druckausgleichsvorgangs zwischen den Fluidanschlüssen herzustellen. Wenn nach Eliminierung der Druckdifferenzkraft von der elektromagnetisch betätigten Betätigungseinrichtung die primäre Strömungsverbindung hergestellt wird, ist ebenfalls nur eine verhältnismässig geringe Betätigungskraft aufzubringen. Dies wirkt sich besonders vorteilhaft auf die Auslegung der Elektromagnetanordnung der Betätigungseinrichtung aus, da die aufzubringende elektromagnetische Kraft verhältnismässig gering ist, was zum einen eine energiesparende und somit kostengünstige Stromaufnahme bedeutet, und zum anderen eine einbauraumsparende Ausführung der Komponenten des Magnetkreises, vor allem der Spule und des Ankers, möglich macht.

Gemäss einer bevorzugten Ausführungsform können sowohl das Ventilglied als auch das weitere Ventilglied durch eine gemeinsame Betätigungseinrichtung betätigt werden. Insbesondere kann dabei die gemeinsame Betätigungseinrichtung aufgrund der zuvor dargelegten Vorteile elektromagnetisch gesteuert werden. Dabei kann die Betätigungseinrichtung einen zweistufigen Stössel aufweisen, der in Abhängigkeit von dem die Betätigungseinrichtung bewegenden Anker in einer ersten Stufe nur das weitere Ventilglied betätigt, um zunächst die sekundäre Strömungsverbindung herzustellen, und anschliessend in einer zweiten Stufe auch oder nur das Ventilglied zu betätigen, das die primäre Strömungsverbindung herstellt, die das Durchströmverhalten der Ventilanordnung charakterisiert. Weiterhin werden durch die gemeinsame Betätigungseinrichtung eine Betätigungseinrichtung eingespart, demzufolge sich Komponenten und Kosten eingesparen lassen, und sich auch eine kompakte Bauweise der Ventilanordnung ergibt.

Vorteilhafterweise ist die Vorspannkraft der Federanordnung grösser als die Vorspannkraft der weiteren Federanordnung. Dadurch ist die Betätigungskraft zur Herstellung der sekundären Strömungsverbindung, die von der Vorspannkraft der weiteren Federanordnung abhängt, besonders gering, vor allem wenn unterschiedliche Fluiddrücke an den Fluidanschlüssen anstehen. Ausserdem kann sich die weitere Federanordnung über die Federanordnung abstützen, um eine einfache und einbauraumsparende Ausführung der Ventilanordnung zu erzielen.

Unter den Aspekten Einfachheit und Einsparung von Einbauraum ist es von Vorteil, wenn die primäre Strömungsverbindung von einem am Gehäuse der Ventilanordnung ausgestalteten Dichtsitz und dem Ventilglied bestimmt wird. Selbiges gilt, wenn die sekundäre Strömungsverbindung von einem an dem Ventilglied ausgestalteten Dichtsitz und dem weiteren Ventilglied gebildet wird.

Da die Kräftebilanz, einerseits unter der von der Betätigungseinrichtung aufzubringenden Betätigungskraft, andererseits unter der von der Federanordnung aufzubringenden Vorspannkraft und fallweise von der Druckdifferenzkraft zwischen den Fluidanschlüssen der Ventilanordnung bestimmt ist, kann sich hinsichtlich Einfachheit und Einsparung von Einbauraum die Federanordnung an dem Gehäuse der Ventilanordnung abstützen. Der gleiche Vorteil besteht, wenn sich die weitere Federanordnung über das Ventilglied abstützt.

Eine vorteilhafte Alternative ist, wenn das weitere Ventilglied einstückig mit der Betätigungseinrichtung verbunden ist, wodurch sich Komponenten der Ventilanordnung einsparen bzw. einfacher herstellen lassen. Dabei kann, um die Ventilanordnung noch kompakter zu gestalten, vorgesehen werden, dass die weitere Federanordnung die Betätigungseinrichtung vorspannt, damit das weitere Ventilglied seine erste Stellung einnimmt, wobei die weitere Federanordnung sich an dem Gehäuse der Ventilanordnung abstützt.

In besonders bevorzugter Weise ist die erfindungsgemässe Ventilanordnung in einer blockiergeschützten Bremsanlage zu verwenden, die zur Antriebsschlupf- sowie Fahrdynamikregelung eingerichtet ist, und dazu eine Pumpe aufweist, die Bremsfluid von einer Bremsdruckgebereinheit entnimmt, um mit dem Bremsfluid eine Radbremse zu versorgen, wobei der erste Fluidanschluss der Ventilanordnung an die Bremsdruckgebereinheit und der zweite Fluidanschluss der Ventilanordnung an die Eingangsseite der Pumpe angeschlossen ist. Aufgrund der Verwendung der erfindungsgemässen Ventilanordnung ergibt sich hierbei der grosse Vorteil, dass zum einen ein verhältnismässig grosser Strömungsquerschnitt von der Bremsdruckgebereinheit zur Eingangsseite der Pumpe bereitgestellt wird, so dass die Pumpe vor allem bei niedrigen Temperaturen, also wenn sich das Bremsfluid zähflüssig verhält, einen verhältnismässig grossen Volumenstrom fördern kann. Zum anderen ist nur eine verhältnismässig geringe Betätigungskraft aufzubringen, wenn die Ventilanordnung seitens der Brensdruckgebereinheit druckbeaufschlagt wird, was bei einer Betätigung der Bremsdruckgebereinheit über das Bremspedal durch den Fahrer oder bei einer automatischen Betätigung der Bremsdruckgebereinheit zur Vorladung der Pumpe der Fall ist.

Die Erfindung und weitere vorteilhafte Ausgestaltungen werden nachfolgend anhand der Zeichnungen erläutert. Dazu zeigt
Fig. 1 eine Ausführungsform der erfindungsgemässen Ventilanordnung im unbetätigten Zustand,
Fig. 2 die Ausführungsform der erfindungsgemässen Ventilanordnung nach Fig. 1 im betätigten Zustand,
Fig. 3 eine schematische Darstellung einer blockiergeschützten Fahrzeugbremsanlage, in der eine erfindungsgemässe Ventilanordnung verwendet wird.

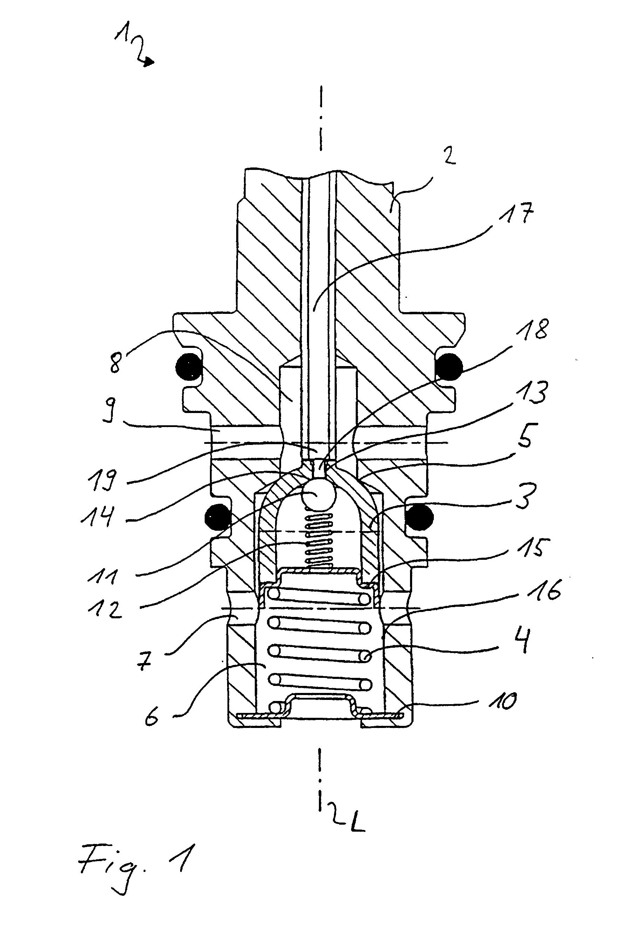

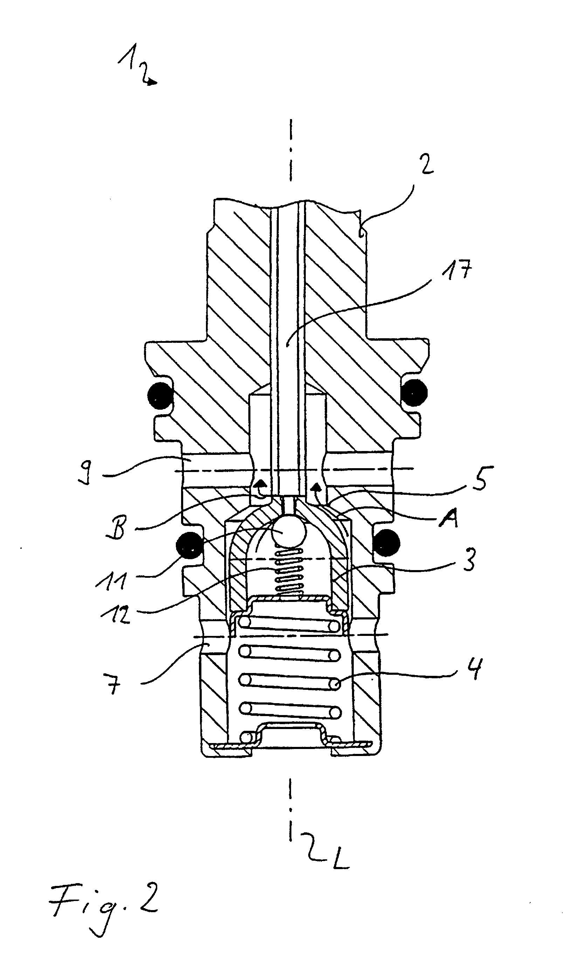

In Fig. 1 und 2 ist eine Ausführungsform der erfindungsgemässen Ventilanordnung 1 jeweils in einem Längsschnitt gezeigt. Der Aufbau der Ventilanordnung 1 gestaltet sich im wesentlichen rotationssymetrisch in Bezug auf eine Längsachse L.

Die Ventilanordnung 1 besteht aus einem Gehäuse 2, in dem ein Ventilglied 3 und eine Federanordnung 4 koaxial zu der Längsachse L aufgenommen sind. In dem Gehäuse 2 ist radial zu der Längsachse L ein Dichtsitz 5 ausgestaltet, mit dem das Ventilglied 3 derart zusammenwirkt, dass das Ventilglied 3 unter Krafteinwirkung der Federanordnung 4 gegen den Dichtsitz 5 dichtend vorgespannt ist, wie in Fig. 1 gezeigt. Dadurch werden eine erste Druckkammer 6, der ein erster Fluidanschluss 7 zugeordnet ist, und eine zweite Druckkammer 8, der ein zweiter Fluidanschluss 9 zugeordnet ist, gebildet. Zur Vorspannung des Ventilglieds 3 stützt sich die Federanordnung 4 über das Gehäuse 2 ab. Um die erste Druckkammer 6 zu verschliessen, ist ein Verschlussteil 10 vorgesehen, das dichtend mit dem Gehäuse 2 verbunden ist, und an dem die Federanordnung 4 anliegt. Auch weist das Verschlussteil 10 eine zapfenförmige Einziehung zur Aufnahme der Federanordnung 4 auf, um für die Federanordnung 4 eine zu der Längsachse L axiale (innere) Führung bereitzustellen.

Das Ventilglied 3 ist domförmig ausgebildet, um auf seiner der ersten Druckkammer 6 zugewandten Seite ein weiteres Ventilglied 11, das kugelförmig ausgebildet ist, und eine weitere Federanordnung 12 koaxial zu der Längsachse L aufzunehmen. Das Ventilglied 3 weist koaxial zu der Längsachse L eine Zentralbohrung 13 auf. Auf der der ersten Druckkammer 6 zugewandten Seite der Zentralbohrung 13 ist an dem Ventilglied 3 radial zu der Längsachse L ein Dichtsitz 14 ausgestaltet, mit dem das weitere Ventilglied 11 derart zusammenwirkt, dass das weitere Ventilglied 11 unter Krafteinwirkung der weiteren Federanordnung 12 gegen den Dichtsitz 14 dichtend vorgespannt ist, so dass die erste und die zweite Druckkammer 6, 8 gegeneinander gesperrt sind, wie in Fig. 1 gezeigt. Dabei stützt sich zur Vorspannung des weiteren Ventilglieds 11 die weitere Federanordnung 12 über das Ventilglied 3 ab, wobei die weitere Federanordnung an einem Fluiddurchlässe aufweisenden Halteteil 15 anliegt, das kraftschlüssig mit dem Ventilglied 3, zum Beispiel über eine Presspassung, verbunden ist. Da sich das Ventilglied 3 über die Federanordnung 4 an dem Gehäuse 2 abstützt, stützt sich die weitere Federanordnung 12 mittelbar an dem Gehäuse 2 ab, so dass das Halteteil 15 auch lose mit dem Ventilglied 3 verbunden sein kann. Das Halteteil 15 liegt zwischen dem Ventilglied 3 und der Federanordnung 4, und weist einen äusseren Rand auf, der die Federanordnung 4 radial umgreift, um somit für die Federanordnung 4 auch eine zu der Längsachse L axiale (äussere) Führung bereitzustellen.

Um eine sichere Funktion der Ventilanordnung 1 zu gewährleisten, ist eine passgenaue und gleitreibungsarme axiale Führung des Ventilglieds 3 wichtig. Dazu kann einerseits das Ventilglied 3 in der Bohrung 16 des Gehäuses 2 unmittelbar geführt sein, andererseits kann die axiale Führung in der Bohrung 16 des Gehäuses 2 über den äusseren Rand des mit dem Ventilglied 3 verbundenen Halteteils 15 besorgt werden.

Zur Betätigung der der Ventilanordnung 1 ist in dem Gehäuse 2 eine Betätigungseinrichtung 17 koaxial zu der Längsachse L aufgenommen. Die Betätigungseinrichtung 17 ist auf der dem Ventilglied 3 zugewandten Seite als stufenförmiger Stössel 18, 19 ausgebildet. Dabei weist der vordere Stössel 18 einen Durchmesser auf, der kleiner ist als der Durchmesser der Zentralbohrung 13, so dass der vordere Stössel 18 in der Zentralbohrung 13 das Ventilglied 3 durchdringt, um mit dem weiteren Ventilglied 11 zusammenzuwirken. Der Durchmesser des hinteren Stössels 19 ist grösser als der Durchmesser der Zentralbohrung 13, so dass der hintere Stössel 19 mit dem Ventilglied 3 zusammenwirkt.

Ebenfalls kann das weitere Ventilglied 11 einstückig mit der Betätigungseinrichtung 17 bzw. dem Stössel 18 oder 19 verbunden sein, so dass die weitere Federanordnung 12 die Betätigungseinrichtung 17 vorspannen kann, wobei sich die weitere Federanordnung 12 unmittelbar an dem Gehäuse 2 abstützt. Bei dieser Ausführung wird zum einen das Halteteil 15 eingespart, zum anderen ergibt sich ein sehr kompakter Aufbau, da die weitere Federanordnung 12 in der Betätigungseinrichtung 17 integriert ist.

Bei dem in Fig. 1 gezeigten unbetätigten Zustand der Ventilanordnung 1 liegt das Ventilglied 3 unter Krafteinwirkung der Federanordnung 4 an dem Dichtsitz 5 an und das weitere Ventilglied 11 liegt unter Krafteinwirkung der weiteren Federanordnung 12 an dem Dichtsitz 14 an, wodurch die erste Druckkammer 6 bzw. der erste Fluidanschluss 7 gegenüber der zweiten Druckkammmer 8 bzw. dem zweiten Fluidanschluss 9 gesperrt ist. Dabei spannt die weitere Federanordnung 12 über das weitere Ventilglied 11 und über den vorderen Stössel 18 die Betätigungseinrichtung 17 in ihre unbetätigte Stellung vor. Der vordere Stössel 18 ist so bemessen, dass er zum einen mit der Zentralbohrung 13 einen radialen Spalt S_{R} bildet, und dass zum anderen zwischen dem hinteren Stössel 19 und dem Ventilglied 3 ein axialer Spalt S_{A} gebildet ist.

Erfolgt nun eine Betätigung der Ventilanordnung 1, wozu die Betätigungseinrichtung 17 in y-Richtung bewegt wird, so hebt der vordere Stössel 18 zunächst das weitere Ventilglied 11 entgegen der Kraft der weiteren Federanordnung 12 von dem Dichtsitz 14 ab, wodurch zwischen der ersten und der zweiten Druckkammer 6, 8 eine sekundäre Strömungsverbindung B hergestellt wird, die sich über den radialen Spalt S_{R}, den der vordere Stössel 18 in der Zentralbohrung 13 bildet, sowie über den axialen Spalt S_{A}, der zwischen dem Ventilglied 3 und dem hinteren Stössel 19 besteht, erstreckt. Da der radiale Spalt S_{R} und der axiale Spalt S_{A} verhältnismässig gross bemessen sind, ist der wirksame Strömungsquerschnitt der sekundären Strömungsverbindung B effektiv durch den ringspaltförmigen Durchlass zwischen dem weiteren Ventilglied 11 und dem Dichtsitz 14 bestimmt.

Wird nunmehr bei Betätigung der Ventilanordnung 1 die Betätigungseinrichtung 17 weiter in y-Richtung bewegt, so kommt nach Überschreitung des Masses des axialen Spaltes S_{A} der hintere Stössel 19 an dem Ventilglied 3 zur Anlage, so dass dieses entgegen der Kraft der Federanordnung 4 von dem Dichtsitz 5 abgehoben wird, so dass eine primäre Strömungsverbindung A zwischen der ersten und der zweiten Druckkammer 6, 8 hergestellt wird, wobei der wirksame Strömungsquerschnitt der primären Strömungsverbindung A effektiv durch den ringspaltförmigen Durchlass zwischen dem Ventilglied 3 und dem Dichtsitz 5 bestimmt ist. Dieser betätigte Zustand ist in Fig. 2 gezeigt. Da der Strömungsquerschnitt der sekundären Strömungsverbindung B im Vergleich zu dem Strömungsquerschnitt der primären Strömungsverbindung A vernachlässigbar ist, macht es keinen bedeutenden Unterschied, ob bei bestehender primären Strömungsverbindung A die sekundäre Strömungsverbindung B aufrechterhalten oder abgesperrt wird. Denn so kann die sekundäre Strömungsverbindung B bei Anliegen des hinteren Stössels 19 an dem Ventilglied 3 gesperrt oder durch geeignete Ausgestaltung des vorderen bzw. hinteren Stössels 18, 19 beispielsweise mit Querbohrungen aufrechterhalten werden.

Damit die sekundäre Strömungsverbindung B (zeitlich) vor der primären Strömungsverbindung A in der zuvor erläuterten Weise hergestellt wird, ist die Vorspannkraft der weiteren Federanordnung 12 kleiner als die Vorspannkraft der Federanordnung 4. Desweiteren ist der wirksame Strömungsquerschnitt der sekundären Strömungsverbindung B erheblich kleiner als der wirksame Strömungsquerschnitt der primären Strömungsverbindung A, da der ringspaltförmige Durchlass zwischen dem Ventilglied 3 und dem Dichtsitz 5 aufgrund der zuvor erläuterten radialgeometrischen Anordnung grösser ist als der ringspaltförmige Durchlass zwischen dem weiteren Ventilglied 11 und dem Dichtsitz 14. Aufgrund dieser Dimensionierung der Ventilanordnung 1 ist seitens der Betätigungseinrichtung 17 zur Herstellung der sekundären Strömungsverbindung B nur eine verhältnismässig geringe Betätigungskraft aufzubringen. Denn kraftmässig ist zunächst nur die geringe Vorspannkraft der weiteren Federanordnung 12 und erst anschliessend die Vorspannkraft der Federanordnung 4 zu überkommen.

In dem Fall, dass in der ersten Druckkammer 6 bzw. am ersten Fluidanschluss 7 ein höherer Druck als in der zweiten Druckkammer 8 bzw. am zweiten Fluidanschluss 9 ansteht, ist zunächst zusätzlich zu der Vorspannkraft der weiteren Federanordnung 12 eine Druckdifferenzkraft zu überkommen, die aber wegen des sehr kleinen wirksamen Strömungsquerschnitts der sekundären Strömungsverbindung B ebenfalls gering ist, so dass die aufzubringende Betätigungskraft gering bleibt. Allerdings findet über die sekundäre Strömungsverbindung B ein Druckausgleichsvorgang zwischen der ersten und der zweiten Druckkammer 6, 8 statt, wodurch die Druckdifferenzkraft (nahezu) vollständig abgebaut wird, so dass anschliessend bei Herstellung der primären Strömungsverbindung A nur noch die Vorspannkraft der Federanordnung 4 zu überkommen ist. Würde entgegen dem die Druckdifferenz zwischen der ersten und der zweiten Druckkammer 6, 8 bei Herstellung der primären Strömungsverbindung A nach wie vor bestehen, so wäre aufgrund des sehr grossen wirksamen Strömungsquerschnitts der primären Strömungsverbindung A zusätzlich eine sehr hohe Druckdifferenzkraft zu überkommen, was eine erhebliche Erhöhung der aufzubringenden Betätigungskraft zur Folge hätte. Insgesamt ist zu der erfindungsgemässen Ventilanordnung 1 also festzustellen, dass zwischen dem ersten und zweiten Fluidanschluss 7, 9 eine Strömungsverbindung mit einem sehr grossen wirksamen Strömungsquerschnitt herstellbar ist, wobei im Verhältnis dazu die aufzubringende Betätigungskraft sehr gering ist.

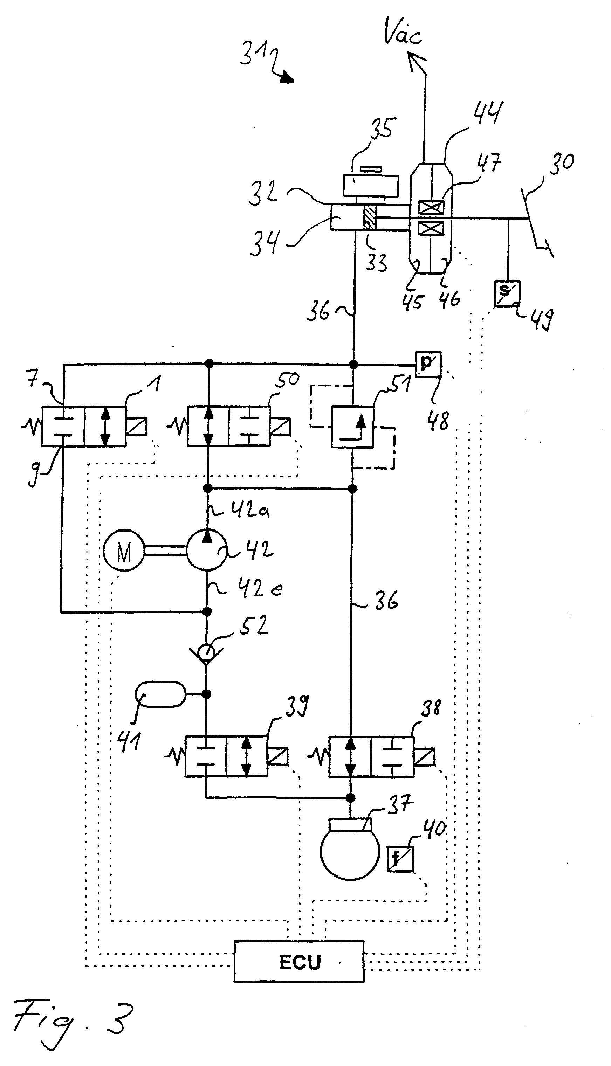

In Fig. 3 ist eine blockiergeschützte Bremsanlage für Kraftfahrzeuge schematisch dargestellt. Ein Bremspedal 1 dient dazu über ein Betätigungselement eine Bremsdruckgebereinheit 31 zu betätigen. Die Bremsdruckgebereinheit 31 weist einen Bremszylinder 32 auf, in dem ein Kolben 33 eine Druckkammer 34 bildet. Die Druckkammer 34 wir von einem Reservoir 35 mit Bremsfluid gespeist. Von der Druckkammer 35 führt eine Bremsleitung 36 zu einer Radbremse 37 des Kraftfahrzeugs.

In der Bremsleitung 36 ist eine Ventileinrichtung 38, 39 zwischen der Bremsdruckgebereinheit 31 und der Radbremse 37 angeordnet. Die Ventileinrichtung 38, 39 ist aus zwei Elektromagnetventilen gebildet, die jeweils durch eine elektronische Steuereinheit ECU angesteuert werden, um den Druck in der Radbremse 37 zu modulieren. Dazu erfasst die elektronische Steuereinheit ECU über einen Sensor 40 das Drehverhalten des der Radbremse 37 zugeordneten Fahrzeugrades, um durch Ansteuerung der Elektromagnetventile 38, 39 Druckaufbau-, Druckabbau- sowie Druckhaltephasen einzustellen.

Im elektrisch unbetätigten Zustand nimmt das erste Elektromagnetventil 38 seine geöffnete Stellung und das zweite Elektromagnetventil 39 seine gesperrte Stellung ein, um in der Radbremse 37 Druck aufbauen zu können. Wenn nur das erste Elektromagnetventil 38 betätigt wird, geht das erste Elektromagnetventil 38 in seine abgesperrte Stellung und das zweite Elektromagnetventil 39 bleibt in seiner gesperrten Stellung, so dass der Druck in der Radbremse 37 konstant gehalten wird. Werden sowohl das erste und das zweite Elektromagnetventil 38, 39 betätigt, geht das erste Elektromagnetventil 38 in seine gesperrte Stellung und das zweite Elektromagnetventil 39 in seine geöffnete Stellung. in diesem Fall kann Bremsfluid aus der Radbremse 37 über das zweite Elektromagnetventil 39 in einen Zwischenspeicher 41 abfliessen. Über eine Hydraulikpumpe 42 wird das in dem Zwischenspeicher 41 befindliche Bremsfluid in die Bremsleitung 36 zurückgefördert. Die Hydraulikpumpe 42 wird durch einen Elektromotor 43 angetrieben, der ebenfalls von der elektronischen Steuereinheit ECU angesteuert wird. Die Ventileinrichtung 38, 39 kann auch mit einem mechanischen Mengenregelventil anstelle des ersten Elektromagnetventils 38 oder mit einem elektromagnetisch betätigtem Drei-Zwei-Wege- oder Drei-Drei-Wege-Ventil anstelle der beiden Elektromagnetventile 38, 39 ausgestaltet sein.

Die Bremsdruckgebereinheit 31 weist zur Verstärkung der über das Bremspedal 30 eingeleiteten Betätigungskraft einen pneumatischen Bremskraftverstärker 44 auf. Eine bewegliche Wand unterteilt den pneumatischen Bremskraftverstärker 44 in eine Unterdruckkammer 45 und eine Druckkammer 46. Zur Erzeugung des Unterdrucks ist die Unterdruckkammer 45 an eine nicht näher dargestellte Unterdruckquelle Vac angeschlossen. Bei einem mit einem Ottomotor ausgerüsteten Kraftfahrzeug steht das im Ansaugrohr prinzipbedingt erzeugte Vakuum als Unterdruckquelle Vac zur Verfügung. Dagegen ist bei einem mit einem Diesel- oder Elektromotor angetriebenen Kraftfahrzeug eine zusätzliche Vakuumpumpe als Unterdruckquelle Vac notwendig. Bei einer Betätigung des Bremspedals 30 funktioniert der Bremskraftverstärkers 44 in bekannter Weise dadurch, dass die Druckkammer 46 mit Atmosphärendruck beaufschlagt wird, so dass an der beweglichen Wand eine Druckdifferenz wirkt, die die am Bremspedal 30 eingeleitete Betätigungskraft unterstützt. Im unbetätigten Zustand sind die Unterdruckkammer 45 und die Druckkammer 46 miteinander verbunden und somit druckausgeglichen, so dass an der beweglichen Wand keine Druckdifferenz wirksam ist.

Der Bremskraftverstärker 44 ist über eine Elektromagnetanordnung 47 auch elektrisch steuerbar. Die Elektromagnetanordnung 47 betätigt ein hier nicht näher dargestelltes Steuerventil, um den Bremskraftverstärker 44 in unterschiedliche Steuerstellungen zu bringen. Erstens in eine erste sogenannte Aufbaustellung, in der die Verbindung der Unterdruckkammer 45 mit der Druckkammer 46 gesperrt und die Verbindung der Druckkammer 46 zur Atmosphäre geöffnet ist, so dass an der beweglichen Wand eine Druckdifferenz aufgebaut bzw. erhöht wird. Oder zweitens in in eine zweite sogenannte Haltestellung, in der die Verbindung der Unterdruckkammer 45 mit der Druckkammer 46 und die Verbindung der Druckkammer 46 zur Atmosphäre gesperrt ist, so dass eine an der beweglichen Wand wirkende Druckdifferenz aufrechterhalten wird. Oder drittens in eine dritte sogenannte Abbaustellung, in der die Verbindung der Unterdruckkammer 45 mit der Druckkammer 46 geöffnet und die Verbindung der Druckkammer 46 zur Atmosphäre gesperrt ist, so dass über einen Druckausgleichsvorgang eine an der beweglichen Wand wirkende Druckdifferenz abgebaut wird. Um das Steuerventil in die unterschiedlichen Steuerstellungen zu bringen, bestromt die elektronische Steuereinheit ECU die Elektromagnetanordnung 47 mit einem Strom in der Weise, dass die Einstellung der vorgenannten Steuerstellungen beispielsweise durch Pulsweitenmodulation des Stromsignals erfolgt. Der in der Druckkammer 46 erzeugte und in die Bremsleitung 36 eingeleitete Bremsdruck wird mittels eines Sensors 48 erfasst und an die elektronische Steuereinheit ECU weitergeleitet, um den Bremsdruck in Abhängigkeit von einem gewünschten Druckwert und/oder Druckverlauf zu regeln.

Die elektrische Steuerbarkeit des Bremskraftverstärkers 44 ermöglicht es Bremsvorgänge auch automatisch, also unabhängig von einer Betätigung des Bremspedals 30 auszuführen, was beispielsweise bei Ausführung einer Abstandsregelung der Fall ist. Eine Sensoreinrichtung 49 ist vorgesehen, um mit der Betätigung des Bremspedals 30 in Beziehung stehende Grössen (Pedalweg, Pedalkraft, Pedalbetätigungsgeschwindigkeit) zur Auswertung in der elektronischen Steuereinheit ECU zu erfassen, um auch Bremsungen in Notsituationen, beispielsweise mit der Überschreitung einer bestimmten Pedalbetätigungsgeschwindigkeit als Kriterium, auszuführen.

Die in Fig. 3 gezeigte blockiergeschützte Bremsanlage ist insbesondere auch zur Antriebsschlupf- sowie Fahrdynamikregelung eingerichtet, bei der die erfindungsgemässe Ventilanordnung 1 zur Verwendung kommt Der erste Fluidanschluss 7 der Ventilanordnung 1 ist an die Bremsdruckgebereinheit 31 und der zweite Fluidanschluss 9 der Ventilanordnung 1 ist an die Eingangsseite 42e der Pumpe 42 angeschlossen. Hierbei ist die erfindungsgemässe Ventilanordnung 1 elektromagnetisch betätigbar ausgeführt und wird von der elektronischen Steuereinheit ECU angesteuert. Dazu ist, wie bekannt aber in Fig. 1 und 2 nicht dargestellt, die Betätigungseinrichtung 17 mit einem Anker betrieblich gekoppelt, der mit einer Elektromagnetanordnung zusammenwirkt.

Parallel zu der Ventilanordnung 1 ist in der Bremsleitung 36 zwischen der Bremsdruckgebereinheit 31 und der Ausgangsseite 42a der Pumpe 42 ein von der elektronischen Steuereinheit ECU angesteuertes Elektromagnetventil 50 angeordnet, das im unbetätigten Zustand die Verbindung zwischen der Bremsdruckgebereinheit 31 und der Radbremse 37 herstellt und diese im betätigten Zustand sperrt, so dass die Ausgangsseite 42a der Pumpe 42 nur mit der Radbremse 37 in Verbindung steht. Die Ventilanordnung 1 und das Elektromagnetventil 50 werden (nahezu) zeitgleich von der elektronischen Steuereinheit ECU angesteuert, um die Bremsdruckgebereinheit 31 entweder mit der Radbremse 37 oder der Saugseite 42e der Pumpe 42 zu verbinden. Zu dem Elektromagnetventil 50 ist ein Druckbegrenzungsventil 51 parallel geschaltet, das bei Überschreitung eines bestimmten Druckwertes in der Radbremse 37 bzw. an der 5 Ausgangsseite 42a der Pumpe 42 eine Verbindung von der Radbremse 37 bzw. der Ausgangsseite 42a der Pumpe 42 zu der Bremsdruckgeber 2 herstellt, um Beschädigungen an der Bremsanlage zu vermeiden. An dieser Stelle sei noch erwähnt, dass die Ventilanordnung 1 und das Elektromagnetventil 50 in bekannter Weise durch ein Drei-Zwei-Wege Ventil ersetzt werden können, wobei ebenso das Druckbegrenzungsventil 51 mit der Ventilanordnung 1 und/oder dem Elektromagnetventil 50 zusammengefasst werden kann.

Ein Rückschlagventil 52 ist zwischen dem Zwischenspeicher 41 und der Eingangsseite 42e der Pumpe 42 angeordnet, so dass eine Strömungsverbindung nur in Richtung von dem Zwischenspeicher 41 zu der Saugseite 42e der Pumpe 42 herstellbar ist. Damit wird verhindert, dass bei einer Vorladung der Eingangsseite 42e der Pumpe 42, wozu die Ventilanordnung 1 betätigt ist, Bremsfluid in den Zwischenspeicher 41 entweichen kann.

Bei einer Antriebsschlupfregelung, also wenn die elektronische Steuereinheit ECU eine Durchdrehtendenz des der Radbremse 37 zugeordneten Rades feststellt, werden die Ventilanordnung 1 und das Elektromagnetventil 50 betätigt. Da bei einer Antriebsschlupfregelung eine Betätigung des Bremspedals 30 nicht erfolgt, kann die Pumpe 42 Bremsfluid aus dem Reservoir 35 über die Druckkammer 34 und die Ventilanordnung 1 entnehmen und, da das Elektromagentventil 50 die Verbindung zur Bremsdruckgebereinheit 31 sperrt, mit diesem Bremsfluid unmittelbar die Radbremse 37 beaufschlagen, um der Durchdrehtendenz entgegenzuwirken. Vorteilhaft ist hierbei, dass die erfindungsgemässe Ventilanordnung 1 einen verhältnissmässig grossen Strömungsquerschnitt freigibt, so dass die Pumpe 13 insbesondere bei tiefen Temperaturen einen ausreichend grossen Volumenstrom fördern kann.

Demgegenüber wird bei einer Fahrdynamikregelung, bei der die Fahrzeugstabilität inbesondere beim Fahren in einer Kurve durch automatisches Bremsen verbessert wird, zusätzlich die Eingangsseite 42e der Pumpe 42 mit einem von der Bremsdruckgebereinheit 31 erzeugten Bremdruck vorgeladen, um einen sehr schnellen Druckaufbau in der Radbremse 37 zu erzielen. Dies geschieht durch automatische Ansteuerung des Bremskraftverstärkers 44, wozu in der Druckkammer 34 der Bremsdruckgebereinheit 31 ein Druck in der Grössenordnung von 5 bis 30 bar eingestellt wird, was unter anderem von der Beschaffenheit der Oberfläche der Fahrbahn abhängig ist. Durch das Vorladen der Pumpe 42 über deren Saugseite 42e wird erreicht, dass bereits während der Anlaufphase an der Ausgangsseite 42a der Pumpe 42 ein ausreichendender Druck zur Verfügung steht. Aufgrund der erfindungsgemässen Ausgestaltung der Ventilanordnung 1 ergeben sich hierbei keinerlei Nachteile, wenn die Ventilanordnung 1 gegen den von der Bremsdruckgebereinheit 31 erzeugten Druck betätigt wird. Auch ergeben sich erfindungsgemäss keine Einschränkungen bei der Bemessung des Strömungsquerschnitts der Ventilanordnung 1, so dass insbesondere das sehr gute Tieftemperaturverhalten aufrechterhalten bleibt.

## Patentansprüche

1. Ventilanordnung (1) für eine blockiergeschützte Bremsanlage mit
- einem ersten und einem zweiten Fluidanschluss (7, 9),
- einem Ventilglied (3), das durch eine Federanordnung (4) in eine erste Stellung vorgespannt ist, in der der erste und der zweite Fluidanschluss (7, 9) gegeneinander gesperrt sind,
- einer Betätigungseinrichtung (17), um das Ventilglied (3) in eine zweite Stellung zu bringen, in der der erste und der zweite Fluidanschluss (7, 9) in einer primären Strömungsverbindung (A) stehen,
- einem weiteren Ventilglied (11), das
-- durch eine weitere Federanordnung (12) in eine erste Stellung vorgespannt ist, in der der erste und der zweite Fluidanschluss (7, 9) gegeneinander gesperrt sind, und
-- durch eine weitere Betätigungseinrichtung in eine zweite Stellung bringbar ist, in der der erste und der zweite Fluidanschluss (7, 9) in einer sekundären Strömungsverbindung (B) stehen,
- so dass bei einer Betätigung der Ventilanordnung (1) der erste und der zweite Fluidanschluss (7, 9) zuerst nur in der sekundären Strömungsverbindung (B) und anschliessend in der primären Strömungsverbindung (A) oder der primären und der sekundären Strömungsverbindung (A, B) stehen,
- wobei der Strömungsquerschnitt der primären Strömungsverbindung (A) größer ist als der Strömungsquerschnitt der sekundären Strömungsverbindung (B),
**dadurch gekennzeichnet, dass**
- das Ventilglied (3) domförmig und das weitere Ventilglied (11) kugelförmig ausgebildet ist, wobei das weitere Ventilglied (11) innerhalb des Ventilglieds (3) angeordnet ist.

2. Ventilanordnung nach Anspruch 1,
dadurch **gekennzeichet, dass**
- die Betätigungseinrichtung (17) und/oder die weitere Betätigungseinrichtung elektromagnetisch und/oder hydraulisch gesteuert werden.

3. Ventilanordnung nach Anspruch 1 oder 2,
**dadurch gekennzeichnet, dass**
- sowohl das Ventilglied (3) als auch das weitere Ventilglied (11) durch eine gemeinsame Betätigungseinrichtung (17) betätigt werden.

4. Ventilanordnung nach wenigstens einem der Ansprüche 1 bis 3,
**dadurch gekennzeichnet, dass**
- die Vorspannkraft der Federanordnung (4) grösser ist als die Vorspannkraft der weiteren Federanordnung (12).

5. Ventilanordnung nach wenigstens einem der Ansprüche 1 bis 4,
**dadurch gekennzeichnet, dass**
- die primäre Strömungsverbindung (A) von einem an einem Gehäuse (2) der Ventilanordnung (1) ausgestalteten Dichtsitz (5) und dem Ventilglied (3) bestimmt ist.

6. Ventilanordnung nach wenigstens einem der Ansprüche 1 bis 5,
**dadurch gekennzeichnet, dass**
- die sekundäre Strömungsverbindung (B) von einem an dem Ventilglied (3) ausgestalteten Dichtsitz (14) und dem weiteren Ventilglied (11) bestimmt ist.

7. Ventilanordnung nach wenigstens einem der Ansprüche 1 bis 6,
**dadurch gekennzeichnet, dass**
- die Federanordnung (4) sich an einen/dem Gehäuse (2) der Ventilanordnung (1) abstützt.

8. Ventilanordnung nach wenigstens einem der Ansprüche 1 bis 7,
**dadurch gekennzeichnet, dass**
- die weitere Federanordnung (12) sich über das Ventilglied (3) abstützt.

9. Ventilanordnung nach wenigstens einem der Ansprüche 1 bis 8,
**dadurch gekennzeichnet, dass**
- das weitere Ventilglied (11) einstückig mit der Betätigungseinrichtung (17) verbunden ist

10. Ventilanordnung nach Anspruch 9,
**dadurch gekennzeichnet, dass**
- die weitere Federanordnung (12) die Betätigungseinrichtung (17) vorspannt, damit das weitere Ventilglied (11) seine erste Stellung einnimmt, wobei die weitere Federanordnung (12) sich an einem/dem Gehäuse (2) der Ventilanordnung (1) abstützt.

11. Blockiergeschützte Bremsanlage, die insbesondere zur Antriebsschlupf- sowie Fahrdynamikregelung eingerichtet ist, derart, dass eine Pumpe (42) Bremsfluid von einer Bremsdruckgebereinheit (31) entnimmt, um mit dem Bremsfluid eine Radbremse (37) zu versorgen,
**dadurch gekennzeichnet, dass**
- mindestens eine Ventilanordnung (1) nach wenigstens einem der vorhergehenden Ansprüche 1 bis 10 verwendet wird, wobei der erste Fluidanschluss (7) der Ventilanordnung (1) an die Bremsdruckgebereinheit (31) und der zweite Fluidanschluss (9) der Ventilanordnung (1) an die Eingangsseite (42e) der Pumpe (42) angschlossen ist.

## Claims

1. A valve arrangement (1) for a lock-protected brake system, comprising:
- a first and a second fluid connection (7, 9);
- a valve element (3) which is biased into a first position by a spring arrangement (4), in which the first and the second fluid connections (7, 9) are blocked from each other;
- an actuation means (17), adapted to move the valve element (3) into a second position in which the first and the second fluid connections (7, 9) are in a primary flow connection (A),
- a further valve element (11) which
-- is biased into a first position by a further spring arrangement (12), in which the first and the second fluid connections (7, 9) are blocked from each other; and
-- can be brought into a second position by means of a further actuation means, in which the first and the second fluid connections (7, 9) are in a secondary flow connection (B),
- so that upon an actuation of the valve arrangement (1) the first and the second fluid connection (7, 9) are initially in the secondary flow connection (B) only, and subsequently are in the primary flow connection (A) or in both the primary and the primary and the secondary flow connections (A, B),
- with the flow cross-section of the primary flow connection (A) being larger than the flow cross-section of the secondary flow connection (B).
**characterised in that**
- the valve element (3) is dome-shaped and the further valve element (11) is spherically formed, with the further valve element (11) being arranged within the valve element (3)

2. The valve arrangement according to Claim 1,
**characterised in that**
- the actuation means (17) and/or the further actuation means are controlled electromagnetically and/or hydraulically.

3. The valve arrangement according to Claim 1 or 2,
**characterised in that**
- both the valve element (3) and the further valve element (11) are actuated by a common actuation means (17).

4. The valve arrangement according to at least one of Claims 1 to 3,
**characterised in that**
- the biasing force of the spring arrangement (4) is higher than the biasing force of the further spring arrangement (12).

5. The valve arrangement according to at least one of Claims 1 to 4,
**characterised in that**
- the primary flow connection (A) is determined by a sealing seat (5) formed at a housing (2) of the valve arrangement (1) and by the valve element (3).

6. The valve arrangement according to at least one of Claims 1 to 5,
**characterised in that**
- the secondary flow connection (B) is determined by a sealing seat (14) formed at the valve element (3) and by the further valve element (11).

7. The valve arrangement according to at least one of Claims 1 to 6,
**characterised in that**
- the spring arrangement (4) bears against a/the housing (2) of the valve arrangement (1).

8. The valve arrangement according to at least one of Claims 1 to 7,
**characterised in that**
- the further spring arrangement (12) is supported via the valve element (3).

9. The valve arrangement according to at least one of Claims 1 to 8,
**characterised in that**
- the further valve element (11) is integrally connected with the actuation means (17).

10. The valve arrangement according to Claim 9,
**characterised in that**
- the further spring arrangement (12) biases the actuation means (17) in order for the further valve element (11) to assume its first position, with the further spring arrangement (12) bearing against a/the housing (2) of the valve arrangement (1).

11. A lock-protected brake system which is adapted, in particular, for traction-slip as well as driving dynamics control in such a manner that a pump (42) takes brake fluid from a brake pressure generator unit (31) in order to provide a wheel brake (37) with the brake fluid,
**characterised in that**
- at least one valve arrangement (1) according to at least one of the previous Claims 1 to 10 1s used, with the first fluid connection (7) of the valve arrangement (1) being connected with the brake pressure generator unit (31) and the second fluid connection (9) of the valve arrangement (1) being connected with an inlet side (42e) of the pump (42).

## Revendications

1. Dispositif de soupape (1) pour un dispositif de freinage anti-blocage, comportant
- un premier et un deuxième raccordement de fluide (7, 9),
- un organe de soupape (3), qui est soumis à une précontrainte par un dispositif de ressort (4) dans une première position, dans laquelle le premier et le deuxième raccordement de fluide (7, 9) sont isolés l'un par rapport à l'autre,
- un dispositif d'actionnement (17) pour placer l'organe de soupape (3) dans une deuxième position dans laquelle le premier et le deuxième raccordement de fluide (7, 9) se trouvent dans une liaison primaire d'écoulement (A),
- un deuxième organe de soupape (11),
- qui, au moyen d'un autre dispositif de ressort (12), est soumis à une précontrainte dans une première position dans laquelle le premier et le deuxième raccordement de fluide (7, 9) sont isolés l'un par rapport à l'autre, et
- qui, au moyen d'un deuxième dispositif d'actionnement, peut être placé dans une deuxième position, dans laquelle le premier et le deuxième raccordement de fluide (7, 9) se trouvent dans une liaison secondaire d'écoulement (B),
- de telle façon que lors d'un actionnement du dispositif de soupape (1), le premier et le deuxième raccordement de fluide (7, 9) se trouvent d'abord seulement dans la liaison secondaire d'écoulement (B), puis ensuite dans la liaison primaire d'écoulement (A) ou dans la liaison primaire d'écoulement et la liaison secondaire d'écoulement (A, B),
- la section d'écoulement de la liaison primaire d'écoulement (A) étant plus grande que la section d'écoulement de la liaison secondaire d'écoulement (B),
**caractérisé en ce que**
- l'organe de soupape (3) est réalisé en forme de dôme et **en ce que** le deuxième organe de soupape (11) est réalisé en forme de bille, le deuxième organe de soupape (11) étant disposé à l'intérieur de l'organe de soupape (3).

2. Dispositif de soupapes suivant la revendication 1, **caractérisé en ce que**
- le dispositif d'actionnement (17) et/ou le deuxième dispositif d'actionnement sont commandés électromécaniquement et/ou hydrauliquement.

3. Dispositif de soupapes suivant la revendication 1 ou 2, **caractérisé en ce que**
- aussi bien l'organe de soupape (3) que le deuxième organe de soupape (11) sont actionnés par un dispositif d'actionnement (17) commun.

4. Dispositif de soupapes suivant au moins l'une des revendications 1 à 3,
**caractérisé en ce que**
- la force de précontrainte du dispositif de ressort (4) est plus grande que la force de précontrainte du deuxième dispositif de ressort (12).

5. Dispositif de soupapes suivant au moins l'une des revendications 1 à 4,
**caractérisé en ce que**
- la liaison primaire d'écoulement (A) est déterminée par un siège d'étanchéité (5), réalisé sur un carter (2) du dispositif de soupape (1), et par l'organe de soupape (3).

6. Dispositif de soupapes suivant au moins l'une des revendications 1 à 5,
**caractérisé en ce que**
- la liaison secondaire d'écoulement (B) est déterminée par un siège d'étanchéité (14), réalisé sur l'organe de soupape (3), et par le deuxième organe de soupape (11).

7. Dispositif de soupapes suivant au moins l'une des revendications 1 à 6,
**caractérisé en ce que**
- le dispositif de ressort (4) s'appuie sur un carter ou sur le carter (2) du dispositif de soupape (1).

8. Dispositif de soupapes suivant au moins l'une des revendications 1 à 7,
**caractérisé en ce que**
- le deuxième dispositif de ressort (12) s'appuie au moyen de l'organe de soupape (3).

9. Dispositif de soupapes suivant au moins l'une des revendications 1 à 8,
**caractérisé en ce que**
- le deuxième organe de soupape (11) est relié, en formant une seule pièce, au dispositif d'actionnement (17).

10. Dispositif de soupapes suivant la revendication 9, **caractérisé en ce que**
- le deuxième dispositif de ressort (12) exerce une précontrainte sur le dispositif d'actionnement (17) afin que le deuxième organe de soupape (11) vienne dans sa première position, le deuxième dispositif de ressort (12) s'appuyant sur un carter (2) ou sur le carter (2) du dispositif de soupape (1).

11. Dispositif de freinage anti-blocage, qui est prévue, en particulier, pour une régulation du patinage d'entraînement ainsi que pour une régulation de la dynamique de conduite, de telle façon qu'une pompe (42) reçoive du fluide de freinage par une unité (31) fournissant la pression de freinage, pour alimenter en fluide de freinage un frein de roue (37).
**caractérisée en ce que**
- on utilise au moins un dispositif de soupape (1) conforme à au moins l'une des revendications précédentes 1 à 10, le premier raccordement de fluide (7) du dispositif de soupape (1) étant raccordé à l'unité (31) fournissant la pression de freinage, et le deuxième raccordement de fluide (9) du dispositif de soupape (1) étant raccordé à la face d'entrée (42e) de la pompe (42).
